# EUROPEAN PATENT SPECIFICATION

(11) **EP 2 620 823 B1**
(45) Date of publication and mention of the grant of the patent: **02.03.2016**
(21) Application number: 12765141.2
(22) Date of filing: 07.03.2012
(51) Int. Cl.: G05B 19/18, B23C 3/06, B23Q 15/00, B24B 5/42

(54) **CRANKSHAFT MILLER AND CRANKSHAFT MANUFACTURING METHOD**
KURBELWELLENFRÄSE UND HERSTELLUNGSVERFAHREN FÜR KURBELWELLEN
FRAISEUSE DE VILEBREQUIN ET PROCÉDÉ DE FABRICATION D'UN VILEBREQUIN

(30) Priority: 31.03.2011 JP 2011080818
(43) Date of publication of application: 31.07.2013
(73) Proprietor: Komatsu NTC Ltd., Nanto-shi, Toyama 939-1595 (JP)
(72) Inventor: YAMAZAKI, Narihito, Komatsu-shi, Ishikawa 923-0392 (JP); TATSUO, Masahiro, Komatsu-shi, Ishikawa 923-0392 (JP); SHIMASAKI, Hiroshi, Komatsu-shi, Ishikawa 923-0392 (JP)
(74) Representative: Flügel Preissner Schober Seidel
(86) International application number: PCT/JP2012/055742
(87) International publication number: WO 2012/132795

(56) References cited:
- JP-A- 1 228 752
- JP-A- 4 065 701
- JP-A- 2004 288 164
- JP-A- 2004 288 164
- JP-A- 2006 190 074

## Description

### TECHNICAL FIELD

The present invention relates to an extra-large crankshaft miller and a method of manufacturing a crankshaft.

### BACKGROUND ART

A crankshaft miller is widely used as a device for cutting the main journals and the pin journals of crankshafts (for example, see Patent Document 1).

Moreover, when a pair of chucks for holding both ends of a workpiece are rotationally driven by a pair of servomotors that are synchronized in a crankshaft miller, a technique has been proposed to execute torque control by using a position deviation offset and a position command offset for reducing reaction torque generated between the pair of servomotors (see Patent Document 2). This method is able to suppress a force acting between the pair of servomotors that is caused by workpiece twisting generated in response to residual stress inside the workpiece being released during processing.

### CITATION LIST

### PATENT LITERATURE

Patent Literature 1: Japanese Patent Laid-open No. H6-320319.
Patent Literature 2: Japanese Patent Laid-open No. 2004-288164.

### SUMMARY

### TECHNICAL PROBLEM

However, a master/slave relationship of the servomotors is not examined in detail in the method described in the Patent Document 2. As a result, there is a problem in that workpiece processing accuracy deteriorates due to deviation of the rotation position of the workpiece (e.g., the pin journal) accompanying the torque control.

Additionally, this type of problem occurs in multi-shaft rod-like materials such as cam shafts and the like in addition to crankshafts.

In view of the above conditions, an object of the present invention is to provide a crankshaft miller and a method of manufacturing a crankshaft that are able to suppress a reduction in workpiece processing accuracy.

### SOLUTION TO PROBLEM

The crankshaft according to a first aspect includes a first chuck configured to hold a first end portion of a workpiece, the first chuck having a longitudinal datum seat for the workpiece; a second chuck configured to hold a second end portion of the workpiece, the second chuck facing the first chuck; a first servo motor configured to rotationally drive the first chuck; a second s ervomotor configured to rotationally drive the second chuck; a cu tting tool for cutting the workpiece; a synchronous control unit c onfigured to set one servomotor of the first servomotor and the second servomotor as a master motor and the other servomotor as a stave motor and execute a synchronous control of the first servomotor and the second servomotor during cutting the workpie ce by the cutting tool; a torque control unit configured to execut e a torque control to reduce a reaction torque between the first servomotor and the second servomotor by rotating the slave mot or after the synchronous control; and a position adjustment unit configured to adjust rotation positions of the first chuck and the second chuck after the torque control. The position adjustment u nit is configured to hold the rotation positions of the first chuck and the second chuck when the first servomotor is the slave mot or. The position adjustment unit is configured to return the rotati on position of the second chuck to a rotation position prior to c ommencement of the torque control when the second servomotor is the slave motor.

According to the crankshaft miller of the first aspect, when the first servomotor is the slave motor, the rotation position of the second chuck accompanying the torque control is not adjusted since the second servomotor is the master motor. As a result; there is no deviation in the processing positions of the main journals or the pin journals. Additionally, when the second servomotor is the slave motor, the rotation position of the second chuck is adjusted accompanying the torque control, but deviation of the processing positions of the main journals or the pin journals is suppressed since the rotation position is returned to the original one after the adjustment. In this way, a reduction in workpiece processing accuracy can be reduced by suppressing deviation of the rotation position of the workpiece (e.g., the pin journals) based on the crankshaft miller according to the first aspect.

The crankshaft miller according to a second aspect is related to the first aspect, the position adjustment unit is configured to unclamp the first chuck before returning the rotation position of the second chuck to the rotation position prior to commencement of the torque control when the second servomotor is the slave motor.

According to the crankshaft miller of the second aspect, since there is no need to synchronize the first servomotor that is the master motor with the second servomotor that is the slave motor, the normal master/slave relationship can be maintained. As a result, the master/slave relationship of the first servomotor and the second servomotor does not need to be reversed.

The crankshaft miller according to a third aspect is related to the second aspect, the position adjustment unit is configured to cause the first chuck to be unclamped and adjust the rotation position of the first chuck in accordance with a return amount of the rotation position of the second chuck in a case in which the first chuck is a phase reference of the workpiece.

According to the crankshaft miller of the third aspect, the rotation positions of the pin journals of the workpiece are maintained before and after adjusting by the position adjustment unit and the workpiece phase reference and a relative phase of the first chuck are maintained. As a result, a reduction in workpiece processing accuracy can be suppressed and the result of torque control is applied effectively.

The crankshaft miller according to a fourth aspect is related to any of the first to third aspects, and further includes a determining unit configured to determine whether the reaction torque is larger than a predetermined torque. The torque control unit is configured to execute the torque control only when the reaction torque is determined to be larger than the predetermined torque.

According to the crankshaft miller of the fourth aspect, since the torque control is not executed when the reaction torque is small enough to not affect the processing accuracy of the workpiece, the torque control is suppressed from being executed excessively.

The crankshaft miller according to a fifth aspect is related to the fourth aspect, and further includes an accumulated amount obtaining unit configured to obtain an accumulated amount of an offset amount of the slave motor from the torque control unit. The determining unit is configured to set the predetermined torque so that the larger the predetermined torque the larger the accumulated amount.

Based on the crankshaft miller according to the fifth aspect, a condition in which the machining allowance becomes insufficient due to the accumulated offset amount exceeding an allowable range can be suppressed.

The crankshaft miller according to a sixth aspect is related to any of the first to fifth aspects, the torque control unit is configured to execute the torque control only when the accumulated amount is smaller than a predetermined amount.

Based on the crankshaft miller according to the sixth aspect, a condition in which the machining allowance becomes insufficient due to the accumulated offset amount exceeding an allowable range can be suppressed.

A method of manufacturing a crankshaft according to a seventh aspect includes a holding step for holding a first end portion of a workpiece by a first chuck having a longitudinal datum seat for the workpiece, and holding a second end portion of the workpiece by a second chuck facing the first chuck; a synchronous control step for setting one servomotor of a first servomotor configured to rotationally drive the first chuck and a second servomotor configured to rotationally drive the second chuck as a master motor and the other servomotor as a slave motor, and executing a synchronous control for driving while synchronizing the first servomotor and the second servomotor; a cutting step for cutting the workpiece by a cutting tool during the synchronous control; a torque control step for executing a torque control to reduce a reaction torque between the first servomotor and the second servomotor by rotating the slave motor after the synchronous control; and a position adjustment step for independently adjusting rotation positions of the first chuck and the second chuck after the torque control. The position adjustment step includesg; holding the rotation positions of the first chuck and the second chuck when the first servomotor is the slave motor, and returning the rotation position of the second chuck to a rotation position prior to commencement of the torque control when the second servomotor is the slave motor.

### ADVANTAGEOUS EFFECTS

The present invention as described above provides a crankshaft miller and a method of manufacturing a crankshaft that are able to suppress a reduction in workpiece processing accuracy.

### BRIEF DESCRIPTION OF DRAWINGS

FIG. 1 is a side view of a crankshaft miller 1.
FIG. 2 illustrates plan views of a first chuck 100 as seen from a second chuck 200 side.
FIG. 3 illustrates plan views of the second chuck 200 as seen from the first chuck 100 side.
FIG. 4 is an elevation of a workpiece W end portion.
FIG. 5 is a block diagram illustrating functions of the crankshaft miller 1 (controller 1a).
FIG. 6 describes operations of the crankshaft miller 1 in a setting 1.
FIG. 7 describes operations of the crankshaft miller 1 in a setting 2.
FIG. 8A describes operations of the crankshaft miller 1 in a setting 3.
FIG. 8B describes operations of the crankshaft miller 1 in the setting 3.
FIG. 9A describes operations of the crankshaft miller 1 in a setting 4.
FIG. 9B describes operations of the crankshaft miller 1 in the setting 4.
FIG. 10 is a flow chart for describing operations of the crankshaft miller 1.

### DETAILED DESCRIPTION OF EMBODIMENTS

### (Overall Configuration of crankshaft miller 1)

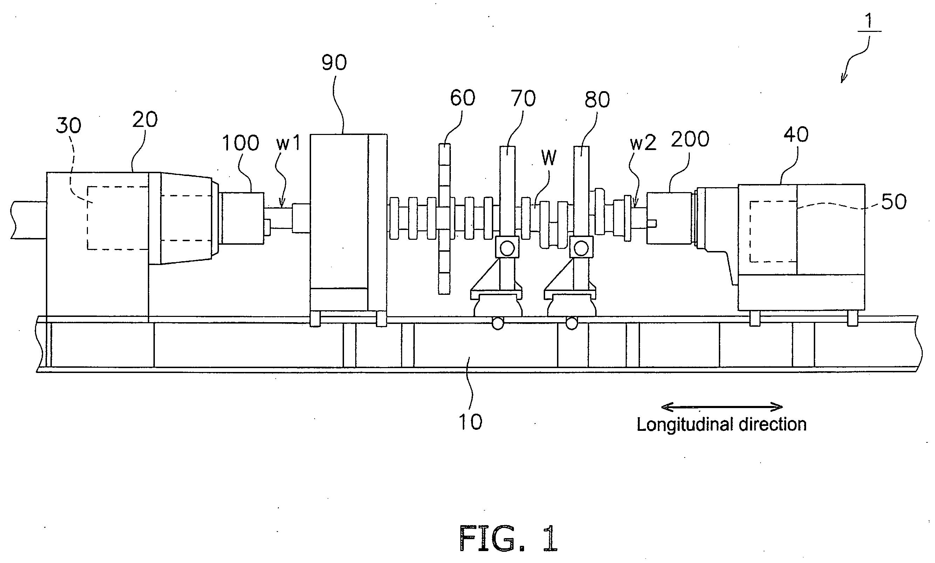

FIG. 1 is a side view of a crankshaft miller 1 according to an embodiment. The crankshaft miller 1 is an extra-large external type crankshaft miller that is capable of cutting a workpiece W. The workpiece W is an untreated crankshaft for an 8-cylinder engine, and has a length of 2 m or more.

The crankshaft miller 1 includes a bed 10, a first work head 20, a first servomotor 30, a second work head 40, a second servomotor 50, a cutting tool 60, a main rest 70, a sub-rest 80, a middle stock 90, a first chuck 100, and a second chuck 200.

The bed 10 supports the first work head 20, the second work head 40, the main rest 70, the sub-rest 80, and the middle stock 90.

The first work head 20 is disposed on the bed 10 and houses the first servomotor 30. The second work head 40 faces the first work head 20 on the bed 10 and houses the second servomotor 50.

The first servomotor 30 and the second servomotor 50 are capable of being synchronously controlled with each other. A master/slave relationship between the first servomotor 30 and the second servomotor 50 can be appropriately set in accordance with the configuration of the crankshaft miller 1 and the workpiece W.

The first chuck 100 is attached to a distal end of the first work head 20. The first chuck 100 holds a first end portion w1 of the workpiece W. The first chuck 100 is the processing datum in the longitudinal direction of the workpiece W. The configuration of the first chuck 100 is described below.

The second chuck 200 is attached to the distal end of the second work head 40 and faces the first chuck 100. The second chuck 200 holds a second end portion w2 of the workpiece W. The configuration of the second chuck 200 is described below.

The cutting tool 60 is a tool for cutting main journals, pin journals, webs, and counterweight portions of the workpiece W. The cutting tool 60 cuts the workpiece W based on forward and reverse motions while being rotated in a state of being fixed at a position in the longitudinal direction (direction in which the workpiece W extends) of the workpiece W. The position of the cutting tool 60 in the longitudinal direction is moved progressively from the second work head 40 side toward the first work head 20 side. In this way, the effect of thermal expansion of the workpiece W accompanying the cutting on the processing accuracy in the longitudinal direction is reduced due to the progressive processing from the second end portion w2 side of the workpiece W.

The main rest 70, the sub-rest 80, and the middle stock 90 support the workpiece W by clamping so that the workpiece W does not vibrate during cutting.

### (First chuck 100)

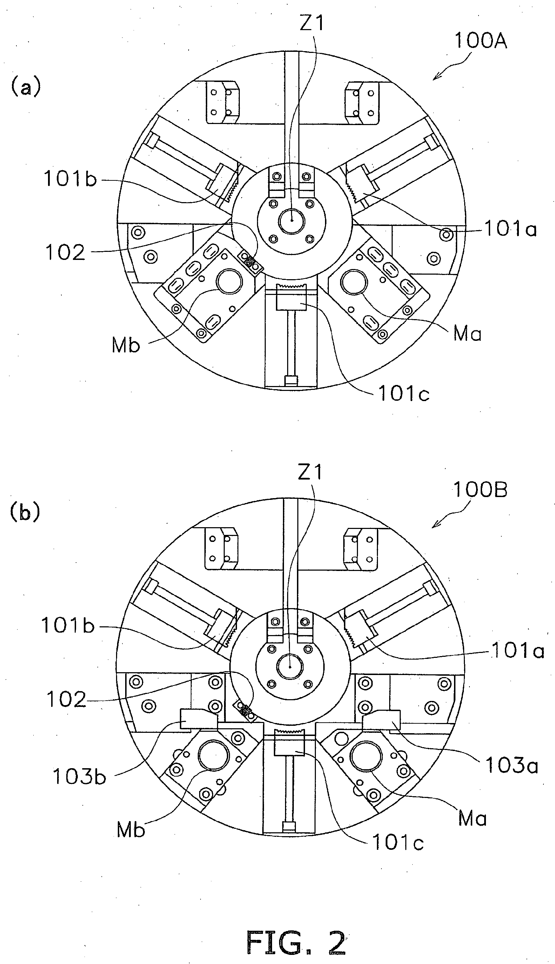

FIG. 2 illustrates plan views of the first chuck 100 as seen from the second chuck 200 side.

The first chuck 100 may take two types of configurations: a first chuck 100A without phase jaws, and a first chuck 100B with phase jaws. An operator is able to appropriately select the first chuck 100A without phase jaws or the first chuck 100B with phase jaws in accordance with the configuration of the workpiece W and the specification of the crankshaft miller 1.

As illustrated in FIG. 2(a) the first chuck 100A without phase jaws has first to third chuck jaw parts 101 a to 101c, a longitudinal datum seat 102, and temporary work seats Ma, Mb. The first to third chuck jaw parts 101a to 101c clamp/unclamp the workpiece W (first end portion w1) by being interlocked in the radial direction of a rotation center line Z1 of the first chuck 100. The first to third chuck jaw parts 101a to 101c are equally disposed in the circumferential direction around the rotation center line Z1. The longitudinal datum seat 102 abuts against the end surface of the first end portion w1 of the workpiece W. The longitudinal datum seat 102 is a member for prescribing the processing datum of the workpiece W in the longitudinal direction. The temporary workpiece seats Ma, Mb are members for supporting the workpiece W when the first to third chuck jaw parts 101a to 101c unclamp the workpiece W.

As illustrated in FIG. 2(b), the first chuck 100B with phase jaws has the first to third chuck jaw parts 101a to 101c, the longitudinal datum seat 102, a pair of phase reference jaws 103a, 103b, and the temporary work seats Ma, Mb. The first chuck 100B with phase jaws differs from the first chuck 100A without phase jaws in that the first chuck 100B has the pair of phase reference jaws 103a, 103b. The pair of phase reference jaws 103a, 103b are members for prescribing a rotation phase reference of the pin journals in the workpiece W. The pair of phase reference jaws 103a, 103b are disposed facing each other on a concentric circle around the rotation center line Z1.

As described above, the first chuck 100 has a configuration that requires the longitudinal datum seat 102 and thus becomes the processing reference of the workpiece W in the longitudinal direction. The first chuck 100 becomes the phase reference of the workpiece W when the first chuck 100 has the pair of phase reference jaws 103a, 103b.

### (Second chuck 200)

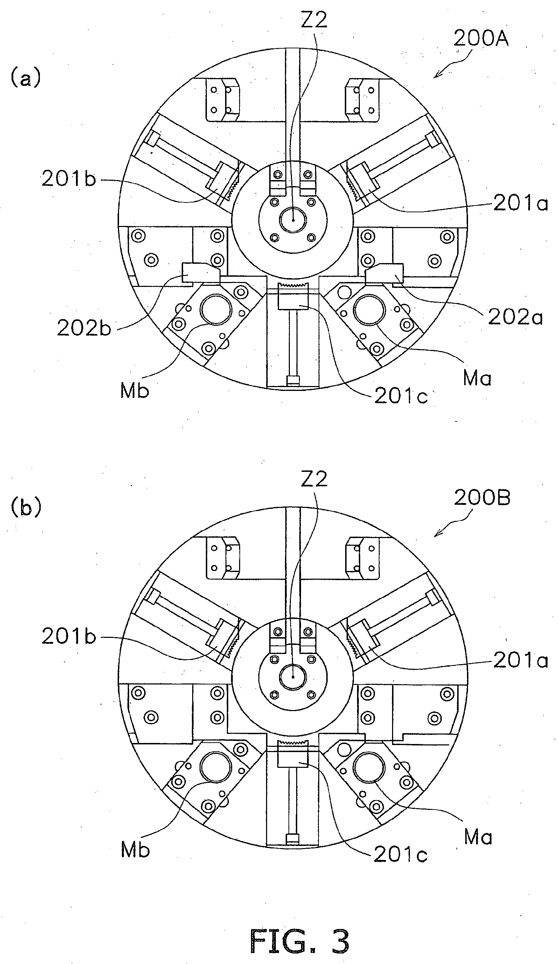

FIG. 3 illustrates plan views of the second chuck 200 as seen from the first chuck 100 side.

The second chuck 200 may take two types of configurations: a second chuck 200A with phase jaws, and a second chuck 200B without phase jaws. The operator is able to appropriately select the second chuck 200A with phase jaws or the second chuck 200B without phase jaws in accordance with the configuration of the workpiece W and the specification of the crankshaft miller 1. However, since the phase reference jaws are provided on one of the first chuck 100 and the second chuck 200, the second chuck 200A with phase jaws forms a set with the first chuck 100A without phase jaws, and the second chuck 200B without phase jaws forms a set with the first chuck 100B with phase jaws.

As illustrated in FIG. 3(a), the second chuck 200A with phase jaws has first to third chuck jaw parts 201 a to 201 b, a pair of phase reference jaws 202a, 202b, and temporary work seats Ma, Mb. The first to third chuck jaw parts 201a to 201c clamp/unclamp the workpiece W (second end portion w2) by interlocking in the radial direction of the rotation center line Z2 of the second chuck 200. The first to third chuck jaw parts 201a to 201c are equally disposed in the circumferential direction of the rotation center line Z2. The pair of phase reference jaws 202a, 202b are members for prescribing the rotation phase reference of the pin journals in the workpiece W. The pair of phase reference jaws 203a, 203b are disposed facing each other on a concentric circle around the rotation center line Z2. The temporary workpiece seats Ma, Mb are members for supporting the workpiece W when the first to third chuck jaw parts 201a to 201c unclamp the workpiece W.

As illustrated in FIG. 3(b), the second chuck 200B without phase jaws has the first to third chuck jaw parts 201a to 201c. The second chuck 200B without phase jaws has a similar configuration as the second chuck 200A with phase jaws, except that the second chuck 200B does not have a pair of phase reference jaws 202a, 202b.

As described above, the second chuck 200 does not include a longitudinal datum seat and thus is not a processing reference of the workpiece W in the longitudinal direction. The second chuck 200 becomes the phase reference of the workpiece W when the second chuck 200 has the pair of phase reference jaws 202a, 202b.

### (Workpiece W)

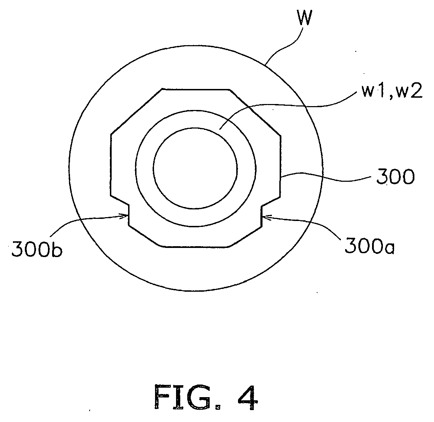

FIG. 4 is an elevation of a workpiece W end portion. As illustrated in FIG. 4, the workpiece W includes a phase reference jig 300 in which is formed a pair of recessed parts 300a, 300b.

The phase reference jig 300 fits into the second end portion w2 when the set of the first chuck 100A without phase jaws and the second chuck 200A with phase jaws is used. In this case, the pair of recessed parts 300a, 300b are latched together with the pair of phase reference jaws 202a, 202b.

The phase reference jig 300 fits into the first end portion w1 when the set of the first chuck 100B with phase jaws and the second chuck 200B without phase jaws is used. In this case, the pair of recessed parts 300a, 300b are latched together with the pair of phase reference jaws 103a, 103b.

### (Functions of crankshaft miller 1)

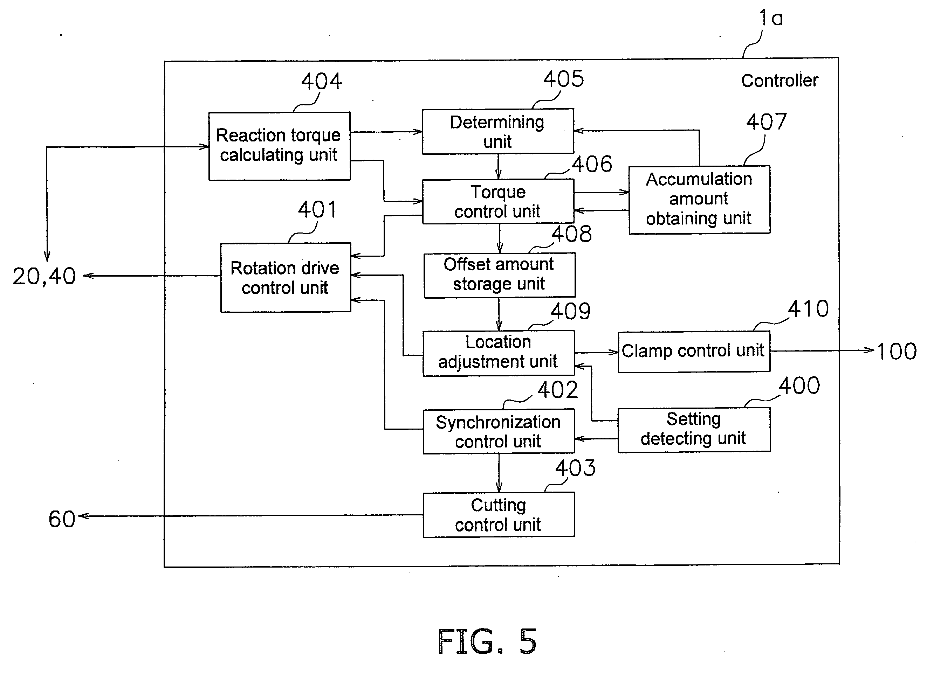

The functions of the crankshaft miller 1 are described below with reference to the drawings. FIG. 5 is a block diagram showing functions of the crankshaft miller 1 (controller 1a).

The controller 1 a includes a setting detecting unit 400, a rotation drive control unit 401, a synchronous control unit 402, a cutting control unit 403, a reaction torque calculating unit 404, a determining unit 405, a torque control unit 406, an accumulated amount obtaining unit 407, an offset amount storage unit 408, a position adjustment unit 409, and a clamp control unit 410.

The setting detecting unit 400 detects settings related to the master/slave relationship of the servomotors and the chuck that becomes the phase reference. The setting detecting unit 400 detects any of settings 1 to 4 described below in accordance with the configuration of the current crankshaft miller 1. The setting detecting unit 400 reports the detected setting to the synchronous control unif 402 and the position adjustment unit 409. The setting detecting unit 400 may have a function for automatically detecting the settings described below, or may receive a setting input from the operator.

**(Table 1)**

| | First servomotor 30 | Second servomotor 50 | Phase reference chuck |
|---|---|---|---|
| Setting 1 | Slave | Master | Second chuck 200 |
| Setting 2 | Slave | Master | First chuck 100 |
| Setting 3 | Master | Slave | Second chuck 200 |
| Setting 4 | Master | Slave | First chuck 100 |

The rotation drive control unit 401 rotationally drives the first servomotor 30 and the second servomotor 50 in accordance with instructions from the synchronous control unit 402, the torque control unit 406, and the position adjustment unit 409.

The synchronous control unit 402 renders one of the first servomotor 30 and the second servomotor 50 as the master motor and the other as the slave motor on the basis of the setting detected by the setting detecting unit 400 during cutting the workpiece W. The synchronous control unit 402 executes synchronous control of the first servomotor 30 and the second servomotor 50 by outputting to the slave motor an output value that is the same as an output value for rotationally driving the master motor. For example, if the setting 1 is detected, the synchronous control unit 402 renders the first servomotor 30 as the slave motor and the second servomotor 50 as the master motor, and outputs the output value for the second servomotor 50 to the first servomotor 30.

The synchronous control unit 402 does not execute synchronous control outside of cutting the workpiece W. Specifically, when cutting is not being performed on the workpiece W, the first servomotor 30 and the second servomotor 50 are capable of being rotationally driven independently.

The cutting control unit 403 drives the cutting tool 60 forward and backward so that the main journals and the pin journals of the workpiece W are cut in a cylindrical manner when the synchronous control is executed by the synchronous control unit 402.

The reaction torque calculating unit 404 calculates the reaction torque acting between the first servomotor 30 and the second servomotor 50. The reaction torque occurs when the workpiece W itself is trying to twist due to residual stress inside the workpiece W being released accompanying the cutting while the servomotors are trying to hold the workpiece W at a certain position. This type of reaction torque can be calculated on the basis of a difference in electrical current values outputted by the first servomotor 30 and the second servomotor 50, and a detailed calculation method is described in Japanese Laid-Open Patent No. 2004-288164. The reaction torque calculating unit 404 reports the calculated reaction torque to the determining unit 405 and the torque control unit 406 when the synchronous control is finished (that is, when the cutting work is finished).

The determining unit 405 determines whether the reaction torque is larger than a predetermined torque. The determining unit 405 reports the determination result to the torque control unit 406. The determining unit 405 increases the predetermined torque in correspondence to an accumulated amount that increases with a higher twist stiffness of the workpiece, and reduces the predetermined torque in correspondence to a reduced accumulated amount.

The torque control unit 406 performs control (referred to as "torque control" hereinbelow) to reduce the reaction torque to "0" when the synchronous control is finished (that is, after the cutting work is finished) and when the reaction torque is determined as being larger than the predetermined torque. Specifically, the torque control unit 406 calculates a slave motor rotation amount required to make the reaction torque "0" (referred to as "offset amount" hereinbelow) on the basis of the calculated reaction torque. The torque control unit 406 then causes the slave motor to be rotated on the basis of the calculated offset amount. A slave motor offset amount calculation method is described in Japanese Laid-Open Patent No. 2004-288164. The torque control unit 406 reports the slave motor offset amount to the accumulated amount obtaining unit 407 and the offset amount storage unit 408, and reports that the torque control is finished to the position adjustment unit 409.

The torque control unit 406 does not execute the torque control when the accumulated offset amount reported by the accumulated amount obtaining unit 407 is larger than a predetermined amount. Specifically, the torque control unit 406 executes the torque control only when the accumulated offset amount is smaller than the predetermined amount.

The accumulated amount obtaining unit 407 obtains the accumulated offset amount reported by the torque control unit 406. The accumulated amount obtaining unit 407 reports the obtained accumulated amount to the torque control unit 406. The accumulated amount obtaining unit 407 determines whether the accumulated offset amount is larger than the predetermined amount and causes an emergency stop of the cutting work when the accumulated amount is larger than the predetermined amount. This is because, when the accumulated offset amount becomes excessively large, there is a high possibility that the machining allowance of the workpiece W will be insufficient as the cutting work is progressively advancing toward the first chuck 100A side. The accumulated amount obtaining unit 407 resets the accumulated amount when the cutting of the entire main journal, the entire pin journal, the entire web, and the counterweight portion of the workpiece W is completed.

The offset amount storage unit 408 stores the offset amount reported by the torque control unit 406.

The position adjustment unit 409 independently adjusts the rotation positions of the first chuck 100 and the second chuck 200 by independently causing the first servomotor 30 and the second servomotor 50 to be driven after the torque control is finished.

Specifically, the position adjustment unit 409 holds the rotation positions of the first chuck 100 and the second chuck 200 after the torque control when the setting 1 or the setting 2 is detected by the setting detecting unit 400 (e.g., when the first servomotor 30 is the slave motor).

Moreover, the position adjustment unit 409 returns the rotation positions of the second chuck 200 after the torque control to the rotation position prior to commencement of the torque control when the setting 3 or the setting 4 is detected by the setting detecting unit 400 (e.g., when the second servomotor 50 is the slave motor). As a result, the processing positions of the main journals or the pin journals of the workpiece W are maintained before and after the adjustment by the position adjustment unit 409.

Moreover, the position adjustment unit 409 uses a value of the offset amount storage unit 408 to adjust the rotation position of the first chuck 100 in accordance with a return amount of the second chuck 200 rotation position when the setting 4 is detected by the setting detecting unit 400 (e.g., when the second servomotor 50 is the slave motor and the first chuck 100 is the workpiece W phase reference). As a result, the rotation positions of the pin journals of the workpiece are maintained before and after adjusting by the position adjustment unit 409 and the workpiece phase reference and a relative phase of the first chuck 100 are maintained.

The operations of the position adjustment unit 409 are described below for each case from the setting 1 to the setting 4.

The clamp control unit 410 controls the clamping/unclamping of the workpiece W by the first chuck 100 in conjunction with adjustments of the rotation positions of the first chuck 100 and the second chuck 200 by the position adjustment unit 409. The operations of the clamp control unit 410 are described below along with the operations of the position adjustment unit 409.

### (operations of crankshaft miller 1)

The operations of the crankshaft miller 1 are described below for each of the settings 1 to 4. The processing operations on the workpiece W are similar to the processing operations of the conventional crankshaft milling machine and will be omitted. Moreover, the abovementioned various types of determination processing will be omitted from the following description.

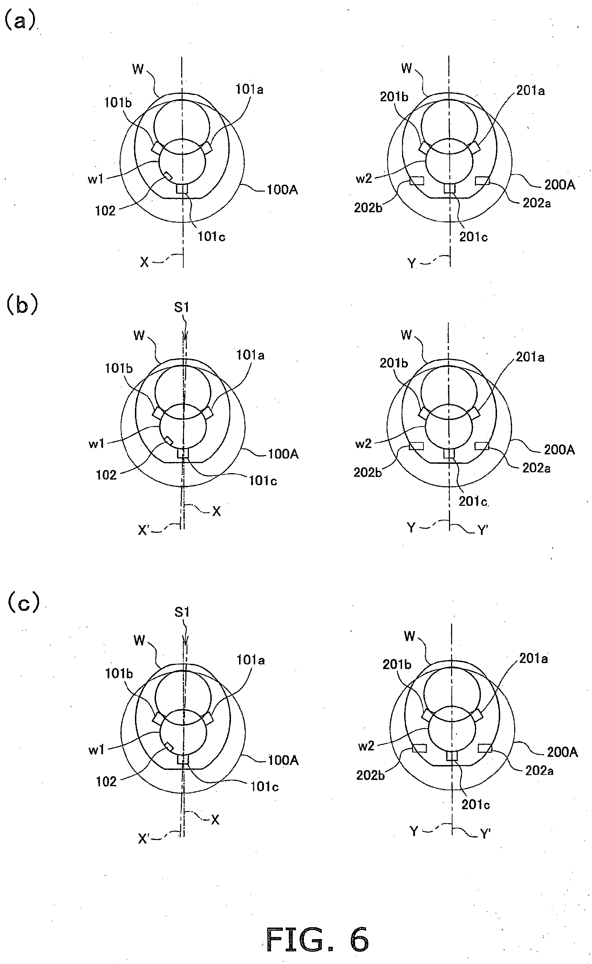

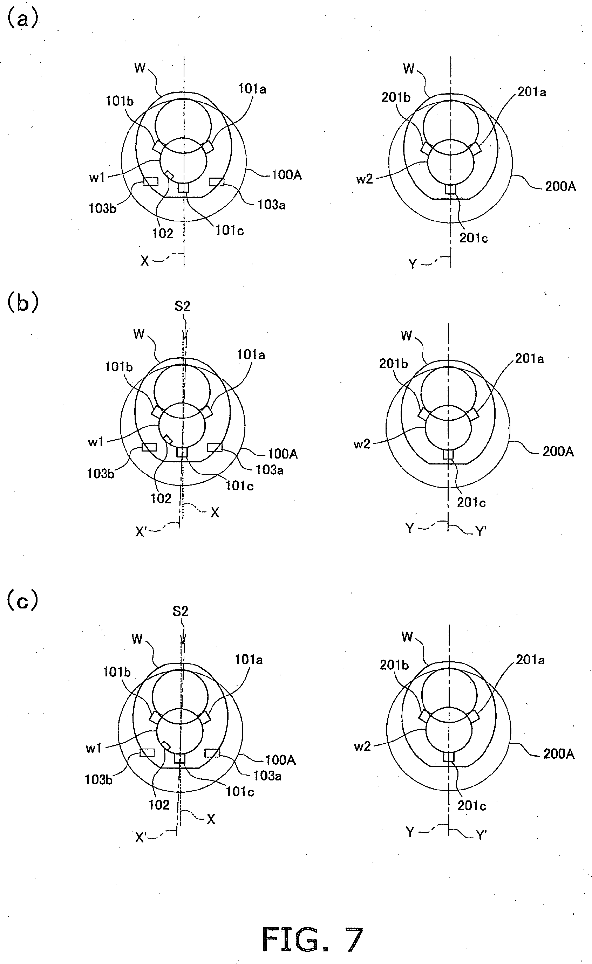

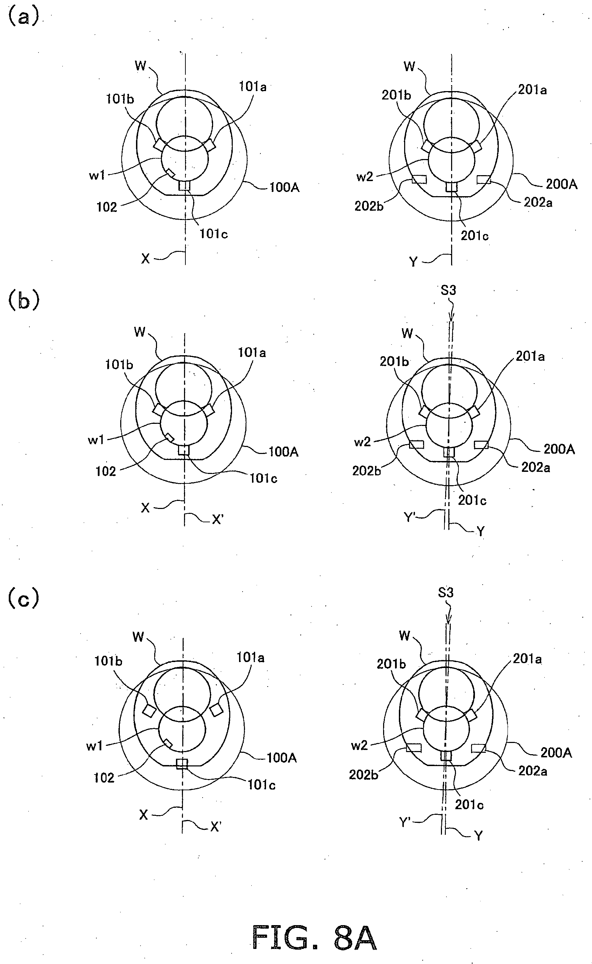

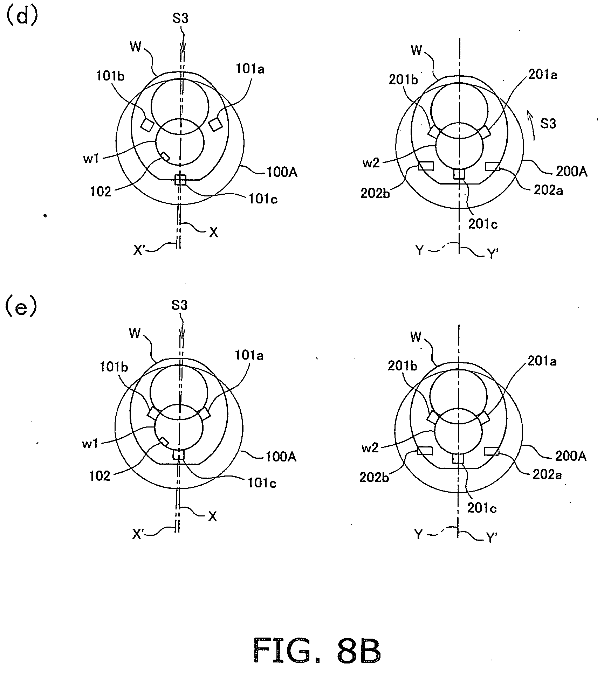

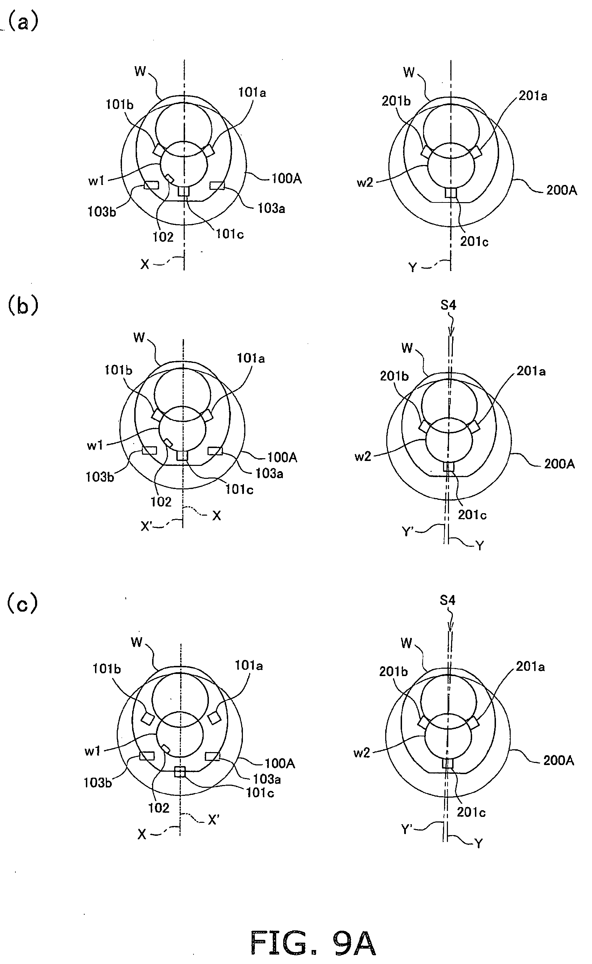

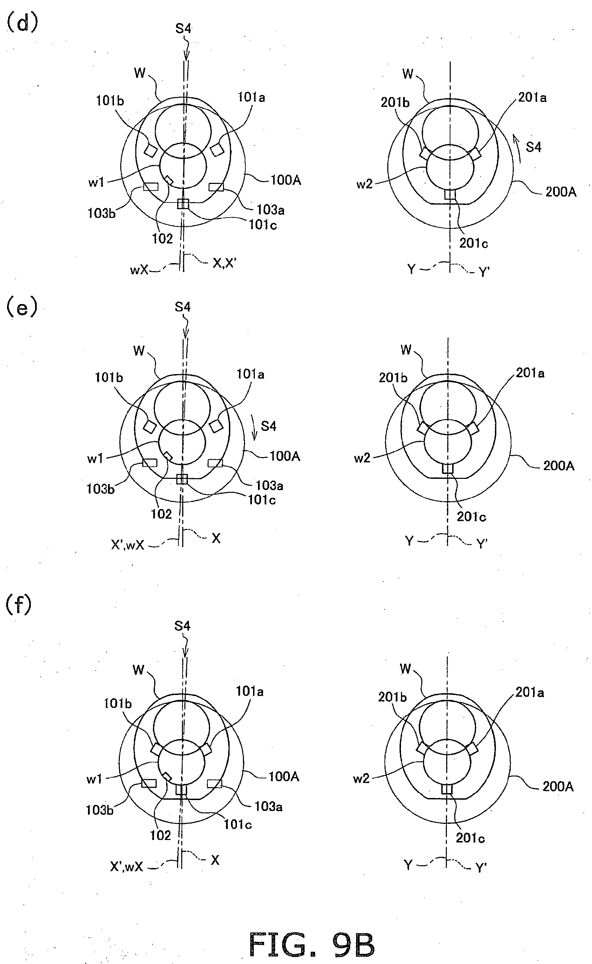

FIG. 6 describes operations of the crankshaft miller 1 in the setting 1. FIG. 7 describes operations of the crankshaft miller 1 in the setting 2. FIGS. 8A and 8B describe operations of the crankshaft miller 1 in the setting 3. FIGS. 9A and 9B describe operations of the crankshaft miller 1 in the setting 4. FIGS. 6 to 9B illustrate perspective plan views of the first chuck 100 and the workpiece W and of the second chuck 200 and the workpiece W.

### 1. Setting 1 case

The first servomotor 30 is the slave motor in the setting 1. The second chuck 200 is the phase reference of the workpiece W since the set of the first chuck 100A without phase jaws and the second chuck 200A with phase jaws is used.

First, as illustrated in FIG. 6(a), the synchronous control is finished (that is, the cutting work is stopped). At this time, the workpiece W is clamped by the first chuck 100A without phase jaws and the second chuck 200A with phase jaws. In FIG. 6(a) illustrates an origin indicating line X that indicates the position of the first chuck 100A without phase jaws at the point in time the synchronous control is finished, and an origin indicating line Y that indicates the position of the second chuck 200A with phase jaws at the point in time the synchronous control is finished.

Next, as illustrated in FIG. 6(b), the first servomotor 30 that is the slave motor rotates in accordance with an offset amount s1 that is required for reducing the reaction torque acting between the first servomotor 30 and the second servomotor 50 to "0" (torque control). Consequently, the offset amount s1 deviation occurs between the origin indicating line X and a post-control designation line X' that indicates the position of the first chuck 100 after the torque control. Conversely, the origin indicating line Y matches a post-control designation line Y' that indicates the position of the second chuck 200 after the torque control.

Next, as illustrated in FIG. 6(c), the rotation positions of the first chuck 100A without phase jaws and the second chuck 200A with phase jaws are held at the positions at the point in time the torque control is finished. Specifically, in the case of the setting 1, the rotation positions of the first chuck 100A without phase jaws and the second chuck 200A with phase jaws are substantially not adjusted.

The cutting tool 60 then moves to the first chuck 100 side to restart the cutting process and the synchronous control of the workpiece W. At this time, although the post-control designation line X' that indicates the position of the first chuck 100 after the torque control deviates by the offset amount s1 from the origin indicating line X, the processing positions of the main journals and the pin journals and the rotation phases of the pin journals are not affected.

### 2. Setting 2 case

In the setting 2, the first servomotor 30 is the slave motor. The first chuck 100 is the workpiece W phase reference since the set of the first chuck 100B with phase jaws and the second chuck 200B without phase jaws is used.

First, as illustrated in FIG. 7(a), the synchronous control is finished (that is, the cutting work is stopped). At this time, the workpiece W is clamped by the first chuck 100B with phase jaws and the second chuck 200B without phase jaws.

Next, as illustrated in FIG. 7(b), the first servomotor 30 that is the slave motor is caused to rotate in response to an offset amount s2 that is required for reducing the reaction torque to "0" (torque control). Consequently, the offset amount s2 deviation occurs between the origin indicating line X and a post-control designation line X'. Conversely, the origin indicating line Y matches a post-control designation line Y' that indicates the position of the second chuck 200 after the torque control.

Next, as illustrated in FIG. 7(c), the rotation positions of the first chuck 100B with phase jaws and the second chuck 200B without phase jaws are held at the positions at the point in time the torque control is finished. Specifically, the rotation positions of the first chuck 100B with phase jaws and the second chuck 200B without phase jaws in the case of the setting 2 are substantially not adjusted in the same way as in the case of the setting 1.

The cutting tool 60 then moves to the first chuck 100 side and the cutting process and the synchronous control of the workpiece W are restarted.

### 3. Setting 3 case

In the setting 3, the second servomotor 50 is the slave motor. The second chuck 200 is the phase reference of the workpiece W since the set of the first chuck 100A without phase jaws and the second chuck 200A with phase jaws is used.

First, as illustrated in FIG. 8A(a), the synchronous control is finished (that is, the cutting work is stopped). At this time, the workpiece W is clamped by the first chuck 100A without phase jaws and the second chuck 200A with phase jaws.

Next, as illustrated in FIG. 8A(b), the second servomotor 50 that is the slave motor is caused to rotate in response to an offset amount s3 that is required for reducing the reaction torque to "0" (torque control). Consequently, the offset amount s3 deviation occurs between the origin indicating line Y and a post-control designation line Y'. Conversely, the origin indicating line X matches a post-control designation line X' that indicates the position of the first chuck 100 after the torque control.

Next, as illustrated in FIG. 8A(c), the first chuck 100A without phase jaws unclamps the workpiece W and thereby rests the workpiece W on the temporary workpiece seats Ma, Mb.

Next, as illustrated in FIG. 8B(d), the rotation positions of the second chuck 200A without phase jaws that is the phase reference is returned to the position prior to commencement of the torque control. That is, the second servomotor 50 is rotated in the return direction only by the offset amount s3. As a result, the processing positions of the main journals or the pin journals of the workpiece W are maintained before and after the adjustment by the position adjustment unit 409 since the origin indicating line Y matches the post-control designation line Y' that indicates the position of the second chuck 200 after the torque control.

Next, as illustrated in FIG. 8B(e), the first chuck 100A without phase jaws clamps the workpiece W.

The cutting tool 60 then moves to the first chuck 100A without phase jaws side and the cutting process and the synchronous control of the workpiece W are restarted.

### 4. Setting 4 case

In the setting 4, the second servomotor 50 is the slave motor. The first chuck 100 is the workpiece W phase reference since the set of the first chuck 100B with phase jaws and the second chuck 200B without phase jaws is used.

First, as illustrated in FIG. 9A(a), the synchronous control is finished (that is, the cutting work is stopped). At this time, the workpiece W is clamped by the first chuck 100B with phase jaws and the second chuck 200B without phase jaws.

Next, as illustrated in FIG. 9A(b), the second servomotor 50 that is the slave motor is caused to rotate in response to an offset amount s4 that is required for reducing the reaction torque to "0"

(torque control). Consequently, the offset amount s4 deviation occurs between the origin indicating line Y and a post-control designation line Y'. Conversely, the origin indicating line X matches the post-control designation line X' that indicates the position of the first chuck 200 after the torque control.

Next, as illustrated in FIG. 9A(c), the first chuck 100B with phase jaws unclamps the workpiece W and thereby rests the workpiece W on the temporary workpiece seats Ma, Mb.

Next, as illustrated in FIG. 9B(d), the rotation position of the second chuck 200B without phase jaws that is not the phase reference is returned to the position prior to commencement of the torque control. That is, the second servomotor 50 is caused to rotate in the return direction only by the offset amount s4. As a result, the processing positions of the main journals or the pin journals of the workpiece W are maintained before and after the adjustment by the position adjustment unit 409 since the origin indicating line Y matches the post-control designation line Y' that indicates the position of the second chuck 200 after the torque control. Conversely, a workpiece reference designation line wX that indicates the reference position of the workpiece W deviates only by the offset amount s4 from the origin indicating line X and the post-control designation line X'.

Next, as illustrated in FIG. 9B(e), the rotation position of the first chuck 100B with phase jaws that is the phase reference is adjusted in response to the return amount (offset amount s4) of the rotation position of the second chuck 200B without phase jaws that is not the phase reference. That is, the first servomotor 30 rotates in the return direction only by the offset amount s4. As a result, the rotation phases of the pin journals of the workpiece are maintained before and after adjusting by the position adjustment unit 409 and the workpiece phase reference and a relative phase of the first chuck 100 are maintained since the post-control designation line X' of the first chuck 100B with phase jaws matches the workpiece reference designation line wX of the workpiece W.

Next, as illustrated in FIG. 9B(f), the first chuck 100B with phase jaws clamps the workpiece W.

The cutting tool 60 then moves to the first chuck 100B with phase jaws side and the cutting process and the synchronous control of the workpiece W are restarted.

### (Operations of crankshaft miller 1)

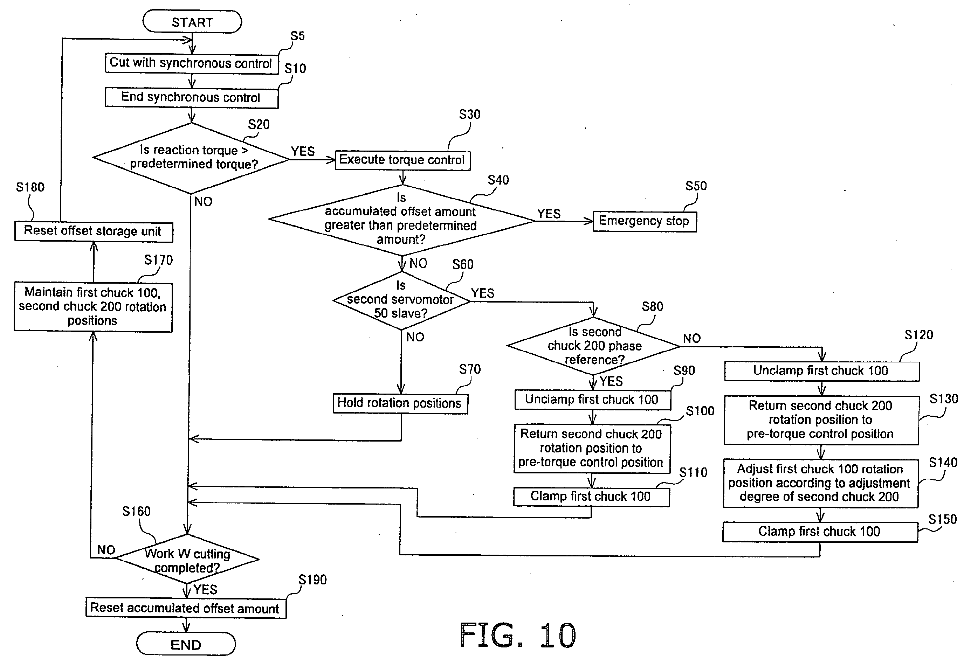

The operations of the crankshaft miller 1 are described below with reference to a flow chart illustrated in FIG. 10.

In step S5, cutting work on the workpiece W is executed by the cutting control unit 403 driving the cutting tool 60 under the synchronous control executed by the synchronous control unit 402.

In step S10, the synchronous control unit 402 finishes the synchronous control of the first servomotor 30 and the second servomotor 50 in response to the finish of the cutting work on the workpiece W.

In step S20, a determination is made as to whether the reaction torque calculated by the reaction torque calculating unit 404 is larger than the predetermined torque. If the reaction torque is larger than the predetermined torque, the routine advances to step S30. If the reaction torque is not larger than the predetermined torque, the routine advances to step S160.

In step S30, the torque control unit 406 executes the torque control.

In step S40, the accumulated amount obtaining unit 407 determines whether the accumulated offset amount is larger than the predetermined amount. If the accumulated amount is larger than the predetermined amount, the routine advances to step S50. If the accumulated amount is not larger than the predetermined amount, the routine advances to step S60.

In step S50, the accumulated amount obtaining unit 407 causes an emergency stop of the cutting work since there is a possibility that the machining allowance is insufficient.

In step S60, the position adjustment unit 409 determines whether the second servomotor 50 is set as the slave motor. If the second servomotor 50 is not set as the slave motor, that is, if the setting 1 or the setting 2 is detected, the routine advances to step S70. If the second servomotor 50 is set as the slave motor, that is, if the setting 3 or the setting 4 is detected, the routine advances to step S80.

In step S70, the position adjustment unit 409 holds the rotation positions of the first chuck 100 and the second chuck 200 at the positions after the torque control. The routine then advances to step S160.

In step S80, the position adjustment unit 409 determines whether the second chuck 200 is the phase reference. If the second chuck 200 is the phase reference, that is, if the setting 3 is detected, the routine advances to step S90. If the second chuck 200 is not the phase reference, that is, if the setting 4 is detected, the routine advances to step S120.

In step S90, the clamp control unit 410 unclamps the first chuck 100 (first chuck 100A without phase jaws).

In step S100, the position adjustment unit 409 returns the rotation position of the second chuck 200 that is the phase reference (the second chuck 200 with phase jaws) to the position prior to commencement of the torque control. Specifically, the second servomotor 50 is caused to rotate in the return direction only by the offset amount s3 in the example of FIG. 8B(d).

In step S110, the clamp control unit 410 clamps the first chuck 100 (first chuck 100A without phase jaws). The routine then advances to step S160.

Conversely, in step S120, the clamp control unit 410 unclamps the first chuck 100 (first chuck 100B with phase jaws).

In step S130, the position adjustment unit 409 returns the rotation position of the second chuck 200 that is not the phase reference (the second chuck 200 without phase jaws) to the position prior to commencement of the torque control position. Specifically, the second servomotor 50 is caused to rotate in the return direction only by the offset amount s4 in the example of FIG. 9B(d).

In step S140, the rotation position of the first chuck 100 that is the phase reference (first chuck 100B with phase jaws) is adjusted using a value in the offset amount storage unit 408 in accordance with the return amount (offset amount s4) of the rotation position of the second chuck 200 that is not the phase reference (second chuck 200B without phase jaws). Specifically, the first servomotor 30 is rotated in the return direction only by the offset amount s4 in the example of FIG. 9B(e).

In step S150, the clamp control unit 410 clamps the first chuck 100 (first chuck 100B with phase jaws). The routine then advances to step S160.

In step S160, the controller 1a determines whether the cutting of all the main journals, all the pin journals, all the webs, and the counterweight portion of the workpiece W is completed. If the cutting is completed, the routine advances to step S190. If the cutting is not completed, the routine advances to step S170 to switch to the cutting work of the next main journal, the next pin journal, the next web, or the counterweight portion.

In step S170, the controller 1 a holds the rotation positions of the first chuck 100 and the second chuck 200.

In step S180, the offset amount storage unit 408 value is reset. The routine then returns to step S5.

In step S190, the accumulated amount obtaining unit 407 resets the accumulated offset amount. Then the processing is completed.

### (Characteristics)

(1) The position adjustment unit 409 in the crankshaft miller 1 holds the rotation positions of the first chuck 100 and the second chuck 200 after the torque control in the case of the setting 1 or the setting 2. Moreover, the position adjustment unit 409 returns the rotation position of the second chuck 200 after the torque control to the rotation position prior to commencement of the torque control.
   Since the second servomotor 50 is the master motor in the case of the setting 1 or the setting 2, the rotation position of the second chuck accompanying the torque control is not adjusted. As a result, there is no deviation in the processing positions of the main journals or the pin journals.
   Since the second servomotor 50 is the slave motor in the case of the setting 3 or the setting 4, the rotation position of the second chuck 200 accompanying the torque control is adjusted. However, deviation of the processing positions of the main journals or the pin journals is suppressed since the rotation position is returned to the original position thereafter.
   In this way, a reduction in workpiece processing accuracy can be reduced by suppressing deviation of the rotation positions of the workpiece W (e.g., the pin journals) based on the crankshaft miller 1.
(2) The position adjustment unit 409 adjusts the rotation position of the first chuck 100 in accordance with the return amount of the rotation position of the second chuck 200 in the case of the setting 4.
   As a result, the rotation phases of the pin journal of the workpiece is maintained before and after adjusting by the position adjustment unit 409 and the workpiece W phase reference and the relative phase of the first chuck 100 are maintained. As a result, a reduction in workpiece W processing accuracy can be further suppressed and the result of torque control is effectively applied.
(3) The torque control unit 406 executes the torque control only when it is determined that the reaction torque is larger than the predetermined torque.
   Therefore; since the torque control is not executed when the reaction torque is small enough to not affect the processing accuracy of the workpiece W, excessive execution of the torque control can be suppressed.
(4) The determining unit 405 increases the predetermined torque in correspondence to an increase in the accumulated offset amount. As a result, a condition in which the machining allowance becomes insufficient due to the accumulated offset amount exceeding an allowable range can be suppressed.
(5) The torque control unit 406 executes the torque control only when the offset accumulated amount is smaller than the predetermined amount. As a result, a condition in which the machining allowance becomes insufficient due to the accumulated offset amount exceeding an allowable range can be avoided.

### Other Embodiments

The present invention is not limited to the above embodiments and various changes and modifications may be made without departing from the spirit of the invention.
(A) Although the reaction torque is reduced to "0" by the torque control in the above embodiments, the reaction torque may be reduced and but may not be reduced to "0" by the torque control.
(B) Although the first chuck 100 unclamps the workpiece W in the cases of the setting 3 and the setting 4, the above embodiment is not limited as such. The rotation position of the first chuck 100 and the rotation position of the second chuck 200 may be adjusted with the first chuck 100 in a clamped state.
(C) Although the crankshaft miller 1 (controller 1a) includes the reaction torque calculating unit 404 for calculating the reaction torque, the above embodiment is not limited as such. The crankshaft miller 1 may have a differential obtaining unit that obtains a differential of supply current values between the servomotors instead of the reaction torque calculating unit 404. In this case, since the differential of the supply current values between the servomotors increases in correspondence to an increase in the reaction torque, a differential value of the supply current values can be regarded as the reaction torque.
(D) Although the workpiece W includes the phase reference jig 300, the above embodiment is not limited as such. A phase reference portion may be integrally formed in the workpiece W itself.
(E) Although a crankshaft for an 8-cylinder engine is raised as an example of the workpiece W, the above embodiment is not limited as such. The crankshaft miller 1 is applicable to a multi-shaft rod-like materials such as a cam shaft and the like that differs from the crankshaft by modifying a program of the cutting control unit 403. As a result, a reduction in processing accuracy can be reduced while suppressing the force acting between the pair of servomotors in cam profile processing of a cam shaft that differs from the crankshaft.
(F) Although the cutting tool 60 is moved progressively from the second work head 40 side toward the first work head 20 side, the above embodiment is not limited as such. The cutting tool 60 may be moved progressively from the first work head 20 side to the second work head 40 side, or may be moved in a random order without progressive movement between the second work head 40 and the first work head 20.

### INDUSTRIAL APPLICABILITY

The present invention is useful for the crankshaft manufacturing field since a reduction in processing accuracy of a workpiece can be suppressed according to the crankshaft miller of the present invention.

### REFERENCE SIGNS LIST

1: Crankshaft miller
10: Bed
20: First work head
30: First servomotor
40: Second work head
50: Second servomotor
60: Cutting tool
70: Main rest
80: Sub-rest
90: Middle stock
100: First chuck
100A: First chuck without phase jaws
100B: First chuck with phase jaws
101a-101c: First to third chuck jaw parts of first chuck
102: Longitudinal datum seat
103a, 103b: Pair of phase reference jaws
200: Second chuck
200A: Second chuck with phase jaws
200B: Second chuck without phase jaws
201a-201c: First to third chuck jaw parts of second chuck
202a, 202b: Pair of phase reference jaws
300: Phase reference jig
Ma, Mb: Temporary work seat
W: Workpiece
w1: First end portion
w2: Second end portion
1 a: Controller
400: Setting detecting unit
401: Rotation drive control unit
402: Synchronous control unit
403: Cutting control unit
404: Reaction torque control unit
405: Determining unit
406: Torque control unit
407: Accumulation amount obtaining unit
408: Offset amount storage unit
409: Location adjustment unit
410: Clamp control unit

## Claims

1. A crankshaft miller comprising:
a first chuck configured to hold a first end portion of a workpiece, the first chuck having a longitudinal datum seat for the workpiece;
a second chuck configured to hold a second end portion of the workpiece, the second chuck facing the first chuck;
a first servomotor configured to rotationally drive the first chuck;
a second servomotor configured to rotationally drive the second chuck;
a cutting tool for cutting the workpiece;
a synchronous control unit configured to set one servomotor of the first servomotor and the second servomotor as a master motor and the other servomotor as a slave motor and execute a synchronous control of the first servomotor and the second servomotor during cutting the workpiece by the cutting tool;
a torque control unit configured to execute a torque control to reduce a reaction torque between the first servomotor and the second servomotor by rotating the slave motor after the synchronous control; and **characterised in that**:
a position adjustment unit configured to adjust rotation positions of the first chuck and the second chuck after the torque control,
the position adjustment unit configured to hold the rotation positions of the first chuck and the second chuck when the first servomotor is the slave motor, and
the position adjustment unit configured to return the rotation position of the second chuck to a rotation position prior to commencement of the torque control when the second servomotor is the slave motor.

2. The crankshaft miller according to claim 1, wherein the position adjustment unit is configured to unclamp the first chuck before returning the rotation position of the second chuck to the rotation position prior to commencement of the torque control when the second servomotor is the slave motor.

3. The crankshaft miller according to claim 2, wherein the position adjustment unit is configured to cause the first chuck to be unclamped and adjust the rotation position of the first chuck in accordance with a return amount of the rotation position of the second chuck in a case in which the first chuck is a phase reference of the workpiece.

4. The crankshaft miller according to any one of claims 1 to 3 further comprising:
a determining unit configured to determine whether the reaction torque is larger than a predetermined torque; wherein
the torque control unit is configured to execute the torque control only when the reaction torque is determined to be larger than the predetermined torque.

5. The crankshaft miller according to claim 4 further comprising:
an accumulated amount obtaining unit configured to obtain an accumulated amount of an offset amount of the slave motor from the torque control unit; wherein
the determining unit is configured to set the predetermined torque so that the larger the predetermined torque the larger the accumulated amount.

6. The crankshaft miller according to any one of claims 1 to 5, wherein
the torque control unit is configured to execute the torque control only when the accumulated amount is smaller than a predetermined amount.

7. A method of manufacturing a crankshaft comprising:
a holding step for holding a first end portion of a workpiece by a first chuck having a longitudinal datum seat for the workpiece, and holding a second end portion of the workpiece by a second chuck facing the first chuck;
a synchronous control step for setting one servomotor of a first servomotor configured to rotationally drive the first chuck and a second servomotor configured to rotationally drive the second chuck as a master motor and the other servomotor as a slave motor, and executing a synchronous control for driving while synchronizing the first servomotor and the second servomotor;
a cutting step for cutting the workpiece by a cutting tool during the synchronous control;
a torque control step for executing a torque control to reduce a reaction torque between the first servomotor and the second servomotor by rotating the slave motor after the synchronous control; and **characterised in that**:
a position adjustment step for independently adjusting rotation positions of the first chuck and the second chuck after the torque control,
the position adjustment step including;
holding the rotation positions of the first chuck and the second chuck when the first servomotor is the slave motor, and
returning the rotation position of the second chuck to a rotation position prior to commencement of the torque control when the second servomotor is the slave motor.

## Patentansprüche

1. Kurbelwellenfräser umfassend:
ein erstes Spannfutter, das ausgebildet ist einen ersten Endbereich eines Werkstücks zu halten, wobei das erste Spannfutter einen Längsbezug-Sitz für das Werkstück aufweist;
ein zweites Spannfutter, das ausgebildet ist einen zweiten Endbereich des Werkstücks zu halten, wobei das zweite Spannfutter dem ersten Spannfutter zugewandt ist;
einen ersten Servomotor, der ausgebildet ist das erste Spannfutter drehend anzutreiben;
einen zweiten Servomotor, der ausgebildet ist, das zweite Spannfutter drehend anzutreiben;
ein Schneidwerkzeug zum Schneiden des Werkstücks;
eine Synchronsteuereinheit, die ausgebildet ist den ersten Servomotor oder den zweiten Servomotor als einen Master-Motor festzulegen und den anderen Servomotor als einen Slave-Motor festzulegen und eine Synchronsteuerung des ersten Servomotors und des zweiten Servomotors während des Schneides des Werkstücks durch das Schneidwerkzeug auszuführen;
eine Drehmomentsteuerungseinheit, die ausgebildet ist eine Drehmomentsteuerung zum Reduzieren eines Reaktionsdrehmoments zwischen dem ersten Servomotor und dem zweiten Servomotor durch Drehen des Slave-Motors nach der Synchronsteuerung auszuführen und **gekennzeichnet durch**:
eine Positionsanpassungseinheit, die ausgebildet ist, Drehpositionen des ersten Spannfutters und des zweiten Spannfutters nach der Drehmomentsteuerung anzupassen,
wobei die Positionsanpassungseinheit ausgebildet ist, die Drehpositionen des ersten Spannfutters und des zweiten Spannfutters zu halten, wenn der erste Servomotor der Slave-Motor ist, und
die Positionsanpassungseinheit ausgebildet ist, die Drehposition des zweiten Spannfutters zu einer Drehposition vor dem Beginn der Drehmomentsteuerung zurückzuführen, wenn der zweite Servomotor der Slave-Motor ist.

2. Kurbelwellenfräser nach Anspruch 1, wobei die Positionsanpassungseinheit ausgebildet ist, das erste Spannfutter auszuspannen, bevor die Drehposition des zweiten Spannfutters zu der Drehposition vor Beginn der Drehmomentsteuerung zurückgeführt wird, wenn der zweite Servomotor der Slave-Motor ist.

3. Kurbelwellenfräser nach Anspruch 2, wobei
die Positionsanpassungseinheit ausgebildet ist, zu bewirken, dass das erste Spannfutter ausgespannt wird und die Drehposition des ersten Spannfutters entsprechend eines Rückstellbetrags der Drehposition des zweiten Spannfutters anpasst falls das erste Spannfutter eine Phasenreferenz des Werkstücks ist.

4. Kurbelwellenfräser nach einem der Ansprüche 1 bis 3, ferner umfassend:
eine Bestimmungseinheit, die ausgebildet ist, zu bestimmen, ob das Reaktionsdrehmoment größer ist als ein vorher festgelegtes Drehmoment; wobei
die Drehmomentsteuerungseinheit ausgebildet ist, die Drehmomentsteuerung nur auszuführen, wenn bestimmt wurde, dass das Reaktionsdrehmoment größer ist als das vorher festgelegte Drehmoment.

5. Kurbelwellenfräser nach Anspruch 4 ferner umfassend:
eine Kumulationsbetragerlangungseinheit, die ausgebildet ist einen kumulierten Betrag eines Offset-Betrags des Slave-Motors von der Drehmomentsteuerungseinheit zu erlangen; wobei
die Bestimmungseinheit ausgebildet ist, das vorher festgelegte Drehmoment derart festzulegen, dass je größer das vorher festgelegte Drehmoment ist, desto größer ist der kumulierte Betrag.

6. Kurbelwellenfräser nach einem der Ansprüche 1 bis 5, wobei
die Drehmomentsteuerungseinheit ausgebildet ist, die Drehmomentsteuerung nur auszuführen, wenn der kumulierte Betrag kleiner ist als ein vorher festgelegter Betrag.

7. Herstellungsverfahren für eine Kurbelwelle, umfassend:
einen Halteschritt zum Halten eines ersten Endbereichs eines Werkstücks durch ein erstes Spannfutter, das einen Längsbezug-Sitz für das Werkstück umfasst, und zum Halten eines zweiten Endbereichs des Werkstücks durch ein zweites Spannfutter, das dem ersten Spannfutter zugewandt ist;
einen Synchronsteuerungsschritt zum Festlegen eines ersten Servomotors, der ausgebildet ist das erste Spannfutter drehend anzutreiben, oder eines zweiten Servomotors, der ausgebildet ist das zweite Spannfutter drehend anzutreiben, als einen Master-Motor und zum Festlegen des anderen Servomotors als einen Slave-Motor und zum Ausführen einer Synchronsteuerung zum Antreiben, während der erste Servomotor und der zweite Servomotor synchronisiert werden;
einen Schneideschritt zum Schneiden des Werkstückes durch ein Schneidwerkzeug während der Synchronsteuerung;
einen Drehmomentsteuerungsschritt zum Ausführen einer Drehmomentsteuerung zum Reduzieren eines Reaktionsdrehmoments zwischen dem ersten Servomotor und dem zweiten Servomotor durch Drehen des Slave-Motors nach der Synchronsteuerung; und **gekennzeichnet durch**:
einen Positionsanpassungsschritt zum unabhängigen Anpassen der Drehpositionen des ersten Spannfutters und des zweiten Spannfutters nach der Drehmomentsteuerung,
wobei der Positionsanpassungsschritt umfasst:
Halten der Drehpositionen des ersten Spannfutters und des zweiten Spannfutters, wenn der erste Servomotor der Slave-Motor ist, und
Zurückführen der Drehposition des zweiten Spannfutters zu einer Drehposition vor dem Beginn der Drehmomentsteuerung, wenn der zweite Servomotor der Slave-Motor ist.

## Revendications

1. Fraiseuse pour vilebrequin, comprenant :
un premier mandrin configuré pour maintenir une première portion d'extrémité d'une pièce à oeuvrer, le premier mandrin ayant un siège de référence longitudinal pour la pièce à oeuvrer ;
un second mandrin configuré pour maintenir une seconde portion d'extrémité de la pièce à oeuvrer, le second mandrin étant en face du premier mandrin ;
un premier servomoteur configuré pour entraîner en rotation le premier mandrin ;
un second servomoteur configuré pour entraîner en rotation le second mandrin ;
un outil de taille pour tailler la pièce à oeuvrer ;
une unité de commande synchrone configurée pour établir qu'un servomoteur parmi le premier servomoteur et le second servomoteur est un moteur maître et que l'autre servomoteur est un moteur asservi et exécuter une commande synchrone du premier servomoteur et du second servomoteur pendant la taille de la pièce à oeuvrer par l'outil de taille ;
une unité de commande de couple configurée pour exécuter une commande de couple afin de réduire un couple de réaction entre le premier servomoteur et le second servomoteur par rotation du moteur asservi après la commande synchrone ; et
**caractérisée en ce que** :
elle comprend une unité d'ajustement de position configurée pour ajuster les positions en rotation du premier mandrin et du second mandrin après la commande de couple,
l'unité d'ajustement de position est configurée pour tenir les positions de rotation du premier mandrin et du second mandrin quand le premier servomoteur est le moteur asservi, et
l'unité d'ajustement de position est configurée pour ramener la position de rotation du second mandrin à une position de rotation avant le commencement de la commande de couple quand le second servomoteur est le moteur asservi.

2. Fraiseuse pour vilebrequin selon la revendication 1, dans laquelle l'unité d'ajustement de position est configurée pour desserrer le premier mandrin avant de ramener la position de rotation du second mandrin à la position de rotation avant le commencement de la commande de couple quand le second servomoteur est le moteur asservi.

3. Fraiseuse pour vilebrequin selon la revendication 2, dans laquelle l'unité d'ajustement de position est configurée pour amener le premier mandrin à être desserré et ajuster la position de rotation du premier mandrin en accord avec une amplitude de retour de la position de rotation du second mandrin dans le cas dans lequel le premier mandrin est une référence de phase de la pièce à oeuvrer.

4. Fraiseuse pour vilebrequin selon l'une quelconque des revendications 1 à 3, comprenant en outre :
une unité de détermination configurée pour déterminer si le couple de réaction est plus élevé qu'un couple prédéterminé ; dans laquelle l'unité de commande est configurée pour exécuter la commande de couple uniquement quand le couple de réaction est déterminé comme étant plus élevé que le couple prédéterminé.

5. Fraiseuse pour vilebrequin selon la revendication 4, comprenant en outre :
une unité d'obtention de quantité accumulée configurée pour obtenir une quantité accumulée d'une quantité de décalage du moteur asservi depuis l'unité de commande de couple ; dans laquelle
l'unité de détermination est configurée pour fixer le couple prédéterminé de telle façon que plus le couple prédéterminé est élevé plus la quantité accumulée est élevée.

6. Fraiseuse pour vilebrequin selon l'une quelconque des revendications 1 à 5, dans laquelle
l'unité de commande de couple est configurée pour exécuter la commande de couple uniquement quand la quantité accumulée est plus faible qu'une quantité prédéterminée.

7. Procédé pour fabriquer un vilebrequin, comprenant :
une étape de maintien pour maintenir une première portion d'extrémité d'une pièce à oeuvrer par un premier mandrin ayant un siège de référence longitudinal pour la pièce à oeuvrer, et maintenir une seconde portion d'extrémité de la pièce à oeuvrer par un second mandrin en face du premier mandrin ;
une étape de commande synchrone pour établir qu'un servomoteur parmi un premier servomoteur, configuré pour entraîner en rotation le premier mandrin, et un second servomoteur, configuré pour entraîner en rotation le second mandrin, est un moteur maître et que l'autre servomoteur est un moteur asservi, et exécuter une commande synchrone pour entraîner tout en synchronisant le premier servomoteur et le second servomoteur ;
une étape de taille pour tailler la pièce à oeuvrer par un outil de taille pendant la commande synchrone ;
une étape de commande de couple pour exécuter une commande de couple afin de réduire un couple de réaction entre le premier servomoteur et le second servomoteur en mettant en rotation le moteur asservi après la commande synchrone ; et
**caractérisé en ce qu'**il comprend
une étape d'ajustement de position pour ajuster indépendamment les positions en rotation du premier mandrin et du second mandrin après la commande de couple,
l'étape d'ajustement de position incluant :
l'opération consistant à maintenir les positions de rotation du premier mandrin et du second mandrin quand le premier servomoteur est le moteur asservi, et
ramener la position de rotation du second mandrin à une position de rotation avant le commencement de la commande de couple quand le second servomoteur est le moteur asservi.
